# EUROPEAN PATENT SPECIFICATION

(11) **EP 4 037 285 B1**
(45) Date of publication and mention of the grant of the patent: **22.11.2023**
(21) Application number: 21382085.5
(22) Date of filing: 02.02.2021
(51) Int. Cl.: H04L 67/02, H04L 67/303, H04W 4/21, H04W 4/80

(54) **METHOD, SYSTEM AND COMPUTER PROGRAM FOR MANAGING AND TRANSMITTING INFORMATION**
VERFAHREN, SYSTEM UND COMPUTERPROGRAMM ZUR VERWALTUNG UND ÜBERTRAGUNG VON INFORMATIONEN
PROCÉDÉ, SYSTÈME ET PROGRAMME INFORMATIQUE PERMETTANT DE GÉRER ET DE TRANSMETTRE DES INFORMATIONS

(43) Date of publication of application: 03.08.2022
(73) Proprietor: Báscones Aoiz, José Daniel, 08006 Barcelona (ES)
(72) Inventor: Báscones Aoiz, José Daniel, 08006 Barcelona (ES)
(74) Representative: Isern Patentes y Marcas S.L.

(56) References cited:
- US-A1- 2014 317 082
- US-B1- 9 693 222

## Description

### TECHNICAL FIELD OF THE INVENTION

The present invention is directed to a computer implemented method for managing and transmitting information in an information management system wherein the information is stored and managed by means of a server, such as the cloud, such as the information stored in said server is accessible by means of access links arranged in tags of the NFC, RFID, QR, or similar type, said tags being provided for establishing data communication with a portable communication device, wherein, when communicating with the tag, the portable communication device can access the information stored in the server.

### STATE OF THE ART

In today's world, almost all the information available is dumped on servers accessible by means of network links. The greater and more varied information that becomes available, the more effective the ability to share it with users should be.

One example of sharing information dumped on the network has been materialised in the so-called "Electronic business cards" wherein a bar code is arranged on a common business card, for example, a QR code (Quick Response code), which, when decrypted by a portable communication device, such as a smartphone, enables access in the web browser of said smartphone to information stored on a server related to the business card, in this case, professional information about the carrier of the electronic business card.

More recently, and taking advantage of NFC (Near Field Communication) secure wireless near field communication technology, NFC tags have been created that can be associated with a software or app, wherein a user acquires an NFC tag, creates a profile in the software or app to which it uploads information in a database associated with the software of, for example, the social networks and contacts thereof. By means of the software or app, the user enters the profile information thereof on the NFC tag, linking up the software or app with the tag. Thus, by using NFC technology, social networks user profiles can be instantly shared between smartphones.

In the light of the foregoing, and as a reflection of the state of the art, the document US2014317082A1 discloses a system and method for enable a business to purchase a generic, but unique, kit containing one or more signs, with a machine-readable medium. The computer readable medium stores information relating to a unique web address of a configurable web site landing page. The web site landing page can be automatically generated based on information parsed from various other web sites. An administrator configures the web site as desired so that when a user scans the machine-readable medium, the user will be direct to the web site, and will have access to the content configured by the administrator.

Also, the document US9693222B1, provides methods and systems for associating or accessing one or more social media profiles are disclosed herein. The system may include one or more unconnected (Wireless Enabled Devices) WEDs which may broadcast or detect a beacon message, where the beacon message may include the MAC address or other wireless identifier of the broadcasting WED (Wireless Enabled Device). The detecting WED may send a query to an API for accessing or retrieving one or more social media profiles that may be associated with the detected MAC address. The API may check the detected MAC address against a plurality of MAC addresses previously registered in a registry. The API may retrieve links stored in the registry and associated with the registered MAC address. The API may send these links to the detecting WED which may use the links to automatically retrieve one or more social media profiles from third-party providers.

Notwithstanding the foregoing, in the present context it would be an advance in the art to provide better ways of managing personal information on the Internet, or not just personal information, but, for example, business information. For example, improvements are needed to reduce the tedium of users, such as that which can occur when having to search the entire menu of a restaurant for the breakfast menu, increase the control of users over their private information, i.e., selecting the kind of information they want to share, and provide better ways to manage personal or business information according to the relationship of the parties involved.

### DESCRIPTION

The invention is defined by a computer-implemented method for managing and transmitting information in an information management system according to claim 1, an information management system according to claim 7 and a computer program comprising instructions according to claim13. Further embodiments are defined by the dependent claims.

To respond to the required advance of the art, the present invention provides a computer-implemented method for managing and transmitting information in an information management system wherein the elements that compose said system are at least one server in which the information to be managed is stored. This server comprises processing means, such as a controller or processor, capable of processing and/or managing the data or information stored therein.

The system further comprises at least one tag, transponder or the like, provided with a tag code, a unique tag code, for uniquely identifying said tag, a portable communication device, such as a smartphone, tablet, laptop or similar, configured to establish a data connection with said tag.

Given that the portable communication device is used by a person, i.e., it is generally personalised, said portable communication device has associated with it a receiver profile indicative of the person who owns or is using the mobile terminal. This issuer profile have an associated issuer code, a unique issuer code, which aims to identify the issuer profile by means of the server as will be seen below.

Taking into consideration the elements that compose the system, the computer-implemented method of the invention comprises the steps of storing at least one issuer profile on the server. This means that a user who intends to share information that, from now on, will be called "issuer" creates a profile that will be stored on the server, wherein the issuer profile provides a series of data owned by the issuer, such as their name or business name, location, etc.

The issuer profile comprises an issuer code, unique issuer code, which can be assigned by the server at the time of storing or loading the issuer profile, which identifies the stored issuer profile, such that, as the next step of the method, the issuer code is linked up with the tag, associating or linking up the issuer code with the tag code, such that said tag is associated with the issuer profile on the server, i.e., the tag "belongs" to the issuer profile to which it has been associated.

Once the issuer profile has been linked up with the tag by means of the codes thereof, the server generates a link, a unique link, which is assigned to the tag, wherein this link is intended to provide a path that gives access to the issuer profile stored in the server, as is known in the state of the art.

The main feature of the user profile is that it comprises at least one subdirectory, preferably a plurality of subdirectories, so that the information that the issuer intends to share is conveniently distributed in the subdirectory or subdirectories, each of these subdirectories being able to be selected for access, either by the issuer, or by the server based on a protocol that will be detailed below.

The issuer profile, in addition to the subdirectory or the plurality of subdirectories, comprises at least one confidential subdirectory in which relevant or private information of the issuer can be arranged, wherein this confidential subdirectory will be able to be selected for access either by the issuer, or by the server based on a protocol analogous to the one that gives access to the subdirectories.

The objective of storing this issuer profile on the server is for said server to manage access to said issuer profile, so that, when the portable communication device establishes a data connection with the tag, said portable communication device interprets the link of the tag, opens said link in a web browser provided therein to access the issuer profile stored on the server, being able to further access the subdirectory or subdirectories or the confidential subdirectory or confidential subdirectories if said subdirectory or subdirectories have been selected for access.

The issuer will have the power to modify the information of the issuer profile, the subdirectories, and the confidential subdirectory at will and, as the tag comprises a link that, in principle, does not vary and that directs to said issuer profile on the server, the modifications do not affect the tag, i.e., by accessing the issuer profile by means of the tag link, changes in the issuer profile and/or in the subdirectories and/or in the confidential subdirectory can be observed if said subdirectories are accessible.

As part of the method or protocol to enable access to the issuer profile, a receiver database comprising receiver profiles is stored on the server. This database can be completed with issuer profiles previously designated by the issuer and/or fed each time a portable communication device establishes data communication with one of the tags that compose the system, so that, when the connection between the portable communication device and the tag is established, said tag detects, reads or interprets, for example, by means of the receiver code identifying the receiver profile, the receiver profile associated with the portable communication device and transmits it to the server, so that the server compares said receiver profile with the receiver profiles stored in the receiver database and, based on the comparison, provides access to the issuer profile and/or to the subdirectory if said subdirectory has been selected for access, and/or to the confidential subdirectory if it has been selected for access.

Alternatively, the issuer profile is associated with the receiver profile, such that updates to said issuer profile are accessible by the associated receiver profile. That is, the server stores an access permission associated with a particular receiver profile, such that changes made by the issuer to the issuer profile can be notified by the server directly to the portable communication device, for example, by means of SMS instant messaging, email or similar, without the need for the portable communication device to establish data communication with the tag. In this case, the access permission can be given by the issuer, i.e., the issuer grants permission for a specific receiver profile to access the issuer profile, wherein this permission is stored on the server and verified by the latter, so that when the issuer profile is updated, a notification or link to the specific issuer profile is sent.

On the other hand, a tag database is available or linked up with the server, this base comprising the tag codes of each tag. It is important to highlight at this point that one same issuer profile can be associated with several tags, sharing the same subdirectories in each one of the tags, or selecting the subdirectories to be accessible by means of the link of each tag.

In alternative situations, the issuer profile is linked up with the tag receiving on the server, by means of SMS messaging, email, instant messaging or similar, the tag code to be linked up with the issuer profile. This is done in the event that, for example, the issuer does not physically have the tag to which it is going to associate the issuer profile thereof, or, for example, to verify that the tag is one of the tags intended for being part of the system and/or for being able to associate with the issuer profile on the server.

Further, the portable communication device comprises a plurality of receiver profiles associated with the portable communication device, each one of said receiver profiles having the issuer code thereof, and furthermore, the portable device has a device code, a unique device code, so that there is a portable communication device with a device code, with several receiver profiles, each one with the receiver code thereof, these issuer profiles being able to be selected in the portable communication device, such that, prior to the connection between the portable communication device with the tag, a receiver profile is selected, in the portable communication device, and in the connection status between the tag and the portable device, both the device code and the receiver code selected on the portable communication device are transmitted to the server.

Preferably, the information management carried out by the server is authenticated by means of blockchain; therefore, the creation and storage of the issuer profile, the subdirectories thereof and the confidential subdirectories and the information dumped therein are recorded in blockchain transactions by the server. In the same way, the tags, in particular the tag codes, as well as the receiver profiles, the receiver codes and, optionally, the device code associated with the portable communication device are recorded in a blockchain transaction. The foregoing to give traceability to the information, as well as an added security value to the same. The person skilled in the art will see that technologies analogous to blockchain are equally applicable without departing from the scope of the invention.

As part of the information management system, in preferred embodiments the tags are NFC (Near Field Communication) tags, which, as is known, comprise storage media in which, for example, the link that gives access to the issuer profile is stored or, for example, the issuer profile, one or more subdirectories of said issuer profile are stored. Therefore, in this embodiment, the portable communication device is configured to establish an NFC data connection with the tag in the NFC mode thereof.

The tag can also take the form of other RFID devices known in the state of the art.

Alternatively, the tag is a QR tag, wherein the portable communication device comprises a QR tag scanner application configured to generate a URL get request for a web page in a web browser of the portable communication device; in which the QR tag scanner application is configured to transmit the web page to the web browser of the portable communication device, to access the issuer profile stored in the server, and further access the subdirectory and/or the confidential subdirectory, if said subdirectories have been selected for access.

It is important to highlight that, in alternative embodiments, the creation and storage of the issuer profile on the server is carried out by means of identity verification methods such as OCR, document verification, biometric facial recognition technology, Artificial Intelligence and Machine Learning, Cloud computing, among others, which can be carried out by third parties and, when the identity of the issuer has been verified by means of any of these methods, the issuer profile is created. This is done in order to prevent the creation of fraudulent issuer profiles, identity theft and/or similar crimes.

In embodiments of the management system of the invention, a plurality of tags are arranged in particular spaces of an infrastructure, for example, if the issuer is a hotel and, therefore, has an issuer profile of this establishment, and it can arrange tags at the reception, the restaurant or the pool bar, wherein the issuer profile and/or each subdirectory of said issuer profile is associated with the arrangement of each tag in said particular space of the infrastructure.

Alternatively, an issuer creates and stores relevant information regarding himself in his issuer profile, for example, generally, his name and phone number, and then in a subdirectory his professional information (for example, a link to the Linkedln profile or the professional website), in another subdirectory his social information (links to Instagram, Twitter, Facebook profiles, etc., respectively) and in the confidential subdirectory, confidential information of the issuer (identification document, bank accounts, passwords, etc.). At the same time, the issuer can choose which subdirectory will be accessible, or the server can, based on the detection of the receiver profile, give access to the appropriate subdirectory.

The computer-implemented method of the invention is implemented as a computer program, smartphone application or the like, which, when executed by the processing unit of the computer or smartphone, causes them to carry out the method described so far.

The main advantage of the invention is that an issuer, by means of his issuer profile, can transmit information in a differentiated and adjusted way depending on a particular situation or the arrangement of the tag in a particular space of an infrastructure. That is, that the issuer can choose for himself what and with whom he shares information or, preferably, the server can give access to the information recorded in the issuer profile and the subdirectories thereof, based on the identification of the receiver profile that requires the information.

It is also very advantageous that an issuer can associate his issuer profile with multiple tags, it being possible to designate which subdirectory is shown in each tag. Likewise, it is an advantage that one same issuer can create multiple issuer profiles, linking up each issuer profile with one or more tags, being able to share information owned by each issuer profile by means of the tags.

Furthermore, based on the detection of the receiver profile associated with the portable communication device, the server can display personalised information related to the detected receiver profile. This results in an advantage that is reflected in more accurate and usable information on the part of the receiver.

### BRIEF DESCRIPTION OF THE FIGURES

The foregoing and other advantages and features will be more fully understood from the following detailed description of some exemplary embodiments with reference to the attached drawings, which are to be considered by way of illustration and not limitation, wherein:

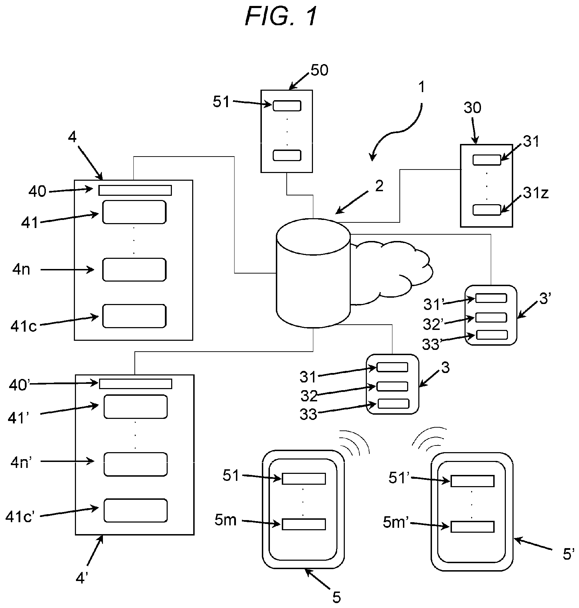

- Figure 1 is a schematic view of an information management system wherein the method of the invention is implemented.

### DETAILED DESCRIPTION OF AN EXEMPLARY EMBODIMENT

Numerous specific details are set forth in the following detailed description in the form of examples to provide a thorough understanding of the relevant teachings. However, it will be apparent to those skilled in the art that the present teachings can be practiced without such details.

In a first exemplary embodiment, as seen in Figure 1, the invention, the computer-implemented method, is developed in an information management system 1, with said system being composed of at least one server 2, one tag, transponder or similar 3, hereinafter tag 3, and one portable communication device 5.

The person skilled in the art will obviously see that the server 2 is provided with storage means (not shown) configured to store the information, processing means (not shown) configured to compute and process the information received and/or stored and communication means (not shown) configured to transmit and/or receive information.

In this first example, a particular user of information, hereinafter issuer, wishes to share information about himself, among which is without limitation, professional information, information from social networks, etc.

With this in mind, an issuer1 creates an issuer profile 4 that will be stored on the server 2, wherein in the root directory of the issuer profile 4 the most basic information of the issuer1 can be arranged, for example, his full name. The information related to the professional profile of the issuer1, for example, a link to his Linkedln profile or the website of the company for which he works, or the link to his profile in a job exchange, are stored in a subdirectory 41 of the issuer profile 4, and the information related to his social networks, links to the Facebook, Instagram, Tik Tok profile, etc., are stored in a subdirectory 42, or it is even possible that, for each one of the professional or social profiles, there is a subdirectory, i.e., a subdirectory 41 for a link to Linkedln, a subdirectory 42 for a link to the job exchange, a subdirectory 43 for the link to Facebook, a subdirectory for the link to Instagram 44, etc., there may be up to 4n subdirectories, wherein the "n" means there is no limitation on the number of subdirectories.

The issuer profile 4 created with its subdirectories 41 to 4n is assigned a name, for example, "issuer1" and stored on the server 2. The issuer profile 4 is associated with an issuer code 40, which generally comprises a link (for example, www.server.co/issuer1) which gives access to the issuer profile 4 on the server 2. The issuer1 can modify the information that he has in his issuer profile 4 at any time. The issuer1 can even create an additional issuer profile 4' with its own subdirectories 41' to 4n'.

Next, a tag 3 is associated, which has a tag code 31, a unique identifier code (for example, "045EDA4A656781"), wherein this tag code 31 generates a unique tag code (for example, "k93kjrjrn334ndnj3") of the tag 3 associated with the server 2 and it is linked up to a unique link 32, such as a URL link (for example, www.server.co/k93kjrjrn334ndnj3).

Next, the issuer profile 4 is linked up with the tag 3, linking up the issuer code 40, (for example, the link "www.server.co/issuer1") with the tag code 31 and/or with the unique tag code that generates the unique tag link 32 (for example, "www.server.co/k93kjrjrn334ndnj3") so that the issuer1 can decide what content from the issuer profile 4 will be displayed when the unique tag link 32 is accessed (for example, www.server.co/k93kjrjrn334ndnj3, wherein this link 32 can redirect to:
- Nothing: as the issuer1 does not want his issuer profile 4 to be shared at that time.
- To the root directory of the issuer profile 4, wherein there is only basic information.
- To all or a portion of the issuer profile 4: www.server.co/issuer1, the issuer1 may designate that a portion or all of the issuer profile 4, the root directory, and/or the different subdirectories be shown. At this point, and as mentioned in the previous section, the server 2 can also grant access to the issuer profile 4 and to the subdirectories (41... 4n) based on the detection of a portable communication device 5, by means of the tag 3, and the receiver profile 51 associated with said portable communication device 5.
- A link or application: for example, the unique tag link 32 of the tag 3 can be redirected to another app or specific link (for example, an Instagram page https://www.instagram.com/issuer1/?hl=en).
- It is also possible to configure the link 32 to redirect to a cloud storage, in which files and/or documents can be uploaded to be shared, so that a receiver receives a link that takes him to the storage to download the file or document.

Based on all the above, in a particular situation, the issuer1 has just met the receiver1, with whom he wants to share his issuer profile 4. The receiver1, which has a receiver profile 51 associated with a portable communication device 5, brings said portable communication device 5 closer to the tag 3 to establish a data connection with said tag 3, conveniently carried by the issuer1.

The unique tag link 32 opens in the web browser of the portable communication device 5 of the receiver1 (www.server.co/k93kjrjrn334ndnj3) and can access the issuer profile 4 and the subdirectories (41... 4n) previously selected by the issuer 1 for access. Thereby, the issuer1 has full control of the information shared in the issuer profile 4 and its subdirectories (41... 4n).

Alternatively, for access to the information of the issuer profile 4 to be granted to the receiver1 by the server 2, a receiver database 50 is stored on the server 2 and comprises receiver profiles 51, 5m, 51', 5m', such that, when the data connection is established between the portable communication device 5 of the receiver1 and the tag 3, said tag 3 receives and transmits to the server 2 the associated receiver profile 51 (for example, by means of a receiver code) to the portable communication device 5, it compares said receiver profile 51 with the receiver profiles 51, 5m, 51', 5m' stored in the receiver database 50 and, based on the comparison, provides access to the issuer profile 4 and/or to the subdirectories 41... 4n.

The issuer can previously have receiver profiles 51... 5m in this receiver database 50, granting these receiver profiles 51... 5m from the database 50 access privileges or permissions, so that the server enables access without the need for the issuer's intervention. Furthermore, when the data connection is established with a portable communication device 5, whose receiver profile 51 is not in the receiver database 50, the server 2 stores said receiver profile 51 in the receiver database 50 to subsequently provide access to the issuer profile 4 when a new data connection is established.

In another exemplary embodiment, the issuer1 is a flower company, whose business name is Flowershop1.

Flowershop1 creates an issuer profile 4, entering their username, for example. "Flowershop1". This issuer profile 4 is stored in the link www.server.co/Flowershop1. Flowershop1 can modify the information in their issuer profile 4 at any time. The issuer profile 4 of Flowershop1 can create different subdirectories 41... 4n each one with different links, and even create other additional issuer profiles 4' with their own subdirectories 41'... 4n'. For example, to enter personalised information about each customer who has bought a bouquet, Flowershop1 can create different issuer profiles 4, 4', etc., wherein each one of said issuer profiles 4, 4' is focussed on a client (for example, issuer profile4 for receiver client 1, issuer profile 4' for receiver client 2).

Flowershop1 is going to link up with their issuer profile 4, for example 100 tags 3, 3', etc., where each tag 3, 3' has a unique tag code 31, 31', etc. Each tag 3, 3' has an associated link 32, 32', for example, www.server.co/6ujgnnj4hsh328 or www.server.co/444gnffns767.

Next, Flowershop1 associates each of their issuer profiles 4, 4', etc., with the link 32, 32', etc., associated with each tag 3, 3', etc., so that Flowershop1 can decide which content each tag 3, 3' will display.

The receiver customer 1 has purchased a bouquet, and Flowershop1 attaches a tag 3 on the packaging with an associated link 32 (www.server.co/6ujgnnj4hsh328) which, when the receiver customer 1 establishes data communication with the tag 3, will direct him to an issuer profile 4 of Flowershop1 intended only for the receiver customer 1 to see.

The receiver customer 2 has purchased a bouquet, and Flowershop1 attaches a tag 3' on the packaging with an associated link 32' (www.server.co/444gnffns767) which will redirect to the issuer profile 4' of Flowershop1 designed only for the receiver customer 2 to see it.

Therefore, the receiver customers 1 and 2 will open the links 32, 32' that will show different information simultaneously.

In another example, the company Restaurant1 creates an issuer profile 4, with the username "Restaurant1". This issuer profile 4 is saved in the link on the server 2 www.server.co/Restaurant1. Restaurant1 can modify the information of their issuer profile 4 at any time. The issuer profile 4 Restaurant1 comprises a plurality of subdirectories 41... 4n', each one provided with different links, and can even create other additional issuer profiles 4', etc.

For example, to enter lunch and dinner menu information, Restaurant1 can create different subdirectories 41... 4n within their issuer profile, wherein the lunch menu is arranged in the subdirectory 41, and the dinner menu in the subdirectory 42.

Restaurant1 is going to link up with their issuer profile 4, for example 10 tags 3, 3', etc., wherein each tag 3, 3' has a unique tag code 31, 31', etc. Each tag 3, 3' has an associated link 32, 32', for example, www.server.co/6ujqnnj4hsh328 or www.server.co/444gnffns767.

Restaurant1 associates the ten tags with their issuer profile 4. In a particular arrangement, they place each tag on each one of the ten tables, so that Restaurant1 can decide what content from their issuer profile 4 they will show, for example, the subdirectory 41 will be accessible during the day and the subdirectory 42 will be accessible at night, but not the subdirectory 41.

The links 32, 32', etc., of each tag 3, 3' will open to the clients (receivers) of Restaurant1, which will redirect to the issuer profile 4 of Restaurant1, and will show the information of the subdirectory that has been conceived for access by Restaurant1 according to schedule.

Additionally, Restaurant1 can create and store an additional issuer profile 4' on the server 2, with subdirectories 41'... 4n', wherein this additional issuer profile 4' is designed for another particular space of the infrastructure of Restaurant1. That is, if Restaurant1 is a hotel, the issuer profile 4 is associated with the restaurant, while the additional issuer profile 4' is associated with, for example, the pool bar. In this way, the tags linked up with the additional issuer profile 4' will show relevant information related to the pool bar to the customers.

It is important to highlight that, in any embodiment, the tags 3, 3', etc., comprise storage means 33, 33', etc., to directly provide a file able to be downloaded by the portable communication device 5 in the tag 3, 3', when establishing data communication with any of the tags 3, 3'.

## Claims

1. A computer-implemented method for managing and transmitting information in an information management system (1) composed of at least one server (2) provided for storing information, at least one tag (3) provided with a tag code (31), a portable communication device (5) configured to establish a connection with said tag (3), said portable communication device (5) having a receiver profile (51) associated thereto, the method comprising:
- storing on the server (2) at least one issuer profile (4), wherein said issuer profile (4) comprises an issuer code (40); and
- linking up the issuer profile (4) with the tag (3), associating the issuer code (40) with the tag code (31);
- assigning to the tag (3) a link (32) associated with the tag code (31) which gives access to the issuer profile (4) stored in the server; and
- the issuer profile (4) comprises at least one subdirectory (41), said subdirectory (41) being able to be selected for access, wherein, in a connection status between the portable communication device (5) and the tag (3), said portable communication device (5) is prepared to interpret the link (31) of the tag, open said link (31) to access the issuer profile (4) stored in the server (2), and further access the subdirectory (41);
the method being **characterised by**:
- storing on the server (2) a receiver database (50) comprising receiver profiles (51, 5m, 51', 5m'), such that, in the connection status between the portable communication device (5) and the tag (3), said tag (3) transmits to the server (2) the receiver profile (51) associated with the portable communication device (5), compares said receiver profile (51) with the receiver profiles (51, 5m, 51', 5m') stored in the receiver database (50) and, based on the comparison, provides access to the issuer profile (4) and/or the subdirectory (41);
wherein the issuer profile (4) further comprises at least one confidential subdirectory (41c), such that in the connection status between the portable communication device (5) and the tag (3), said tag (3) transmits to the server the receiver profile (51) associated with the portable communication device (5), compares said receiver profile (51) with the receiver profiles (51, 5m, 51', 5m') stored in the receiver database (50) and, based on the comparison, provides access to the issuer profile (4) and/or the subdirectory (41) and/or the confidential subdirectory (41c).

2. The method according to the preceding claim, wherein the issuer profile (4) is associated with the receiver profile (51), such that updates in said issuer profile (4) are accessible by the associated receiver profile (51).

3. The method according to any of the preceding claims, wherein the server (2) comprises a tag database (30) in which the tag code (31) of each tag (3) is arranged, such that, in the step of linking up the issuer profile (4) with said tag (3), the issuer profile (4) is linked with the tag, receiving the tag code (31) on the server (2) by means of SMS messaging, email or security messaging authentication.

4. The method according to any of the preceding claims, wherein the portable communication device (5) comprises a plurality of receiver profiles (51 to 5m) associated with the portable communication device (5) and able to be selected in said portable communication device (5), such that, prior to the connection between the portable communication device (5) with the tag (3), a receiver profile (51) is selected in the portable communication device (5).

5. The method according to any of the preceding claims, wherein the tag (3) comprises a configured storage means (33), such that in the step of linking up the issuer profile (4) with said tag (3), the issuer profile (4) or at least one subdirectory (41) of said issuer profile (4) are stored in said storage means (33) of the tag (3), wherein, in a connection status between the portable communication device (5) and the tag (3), said portable communication device (5) accesses the issuer profile (4) or the subdirectory (41) stored in the storage means (33) of the tag (3).

6. The method according to any of the preceding claims, wherein the issuer profile (4) and/or the subdirectories (41 to 4p) of said issuer profile (41) are authenticated by means of blockchain, the issuer profile (4) and/or the subdirectories (41 to 4p) being recorded in a transaction in a blockchain by the server (2), and wherein the receiver database (50) is authenticated by means of blockchain wherein each one of the plurality of receiver profiles (51, 5m, 51', 5m') is recorded in a transaction in a blockchain by the server (2).

7. An information management system (1) comprising at least one tag (3) provided with a link (32) for access to a server (2), this link (32) being interpretable by a portable communication device (5) provided to establish a data connection with said tag (3), and said system comprising means for carrying out the method of claims 1 to 6.

8. The system according to claim 7, wherein the tag (3) is an NFC tag and the portable communication device (5) is configured to establish an NFC data connection with said NFC tag.

9. The system according to claims 7 or 8, wherein the link (32) assigned to the tag (3) comprises an encrypted URL code, readable by the portable communication device (5).

10. The system according to claims 8 or 9, wherein the tag (3) is incorporated into a portable communication device.

11. The system according to claim 8, wherein the tag (3) is a QR tag, wherein the portable communication device (5) comprises a QR tag scanner application configured to generate a URL get request for a web page in a web browser of the portable communication device (5); in which the QR tag scanner application is configured to transmit the web page to the web browser of the portable communication device (5), to access the issuer profile (4) stored in the server (2), and further access the subdirectory (41) and/or the confidential subdirectory (41p), if said subdirectories have been selected for access.

12. The system according to any of claims 7 to 11, wherein a plurality of tags (3, 3') is arranged in particular spaces of an infrastructure, each issuer profile (4, 4') and/or each subdirectory (41, 41') of each issuer profile (4, 4') being associated with the arrangement of each tag (3, 3') in said particular space of the infrastructure.

13. A computer program comprising instructions which, when the program is executed by a computer, causes said computer to carry out the method of claims 1 to 6.

## Patentansprüche

1. Verfahren, System und Computerprogramm zur Verwaltung und Übertragung von Informationen in einem Informationsverarbeitungssystem (1), bestehend aus mindestens einem Server (2) für das Speichern von Informationen, mindestens einem Tag (3), der mit einem Tag-Code (31) versehen ist, einer tragbaren Kommunikationsvorrichtung (5), die konfiguriert ist, eine Verbindung mit dem Tag (3) herzustellen, wobei die tragbare Kommunikationsvorrichtung (5) ein damit verbundenes Empfängerprofil (51) aufweist und das Verfahren Folgendes umfasst:
- Speichern von mindestens einem Ausstellerprofil (4) auf dem Server (2), wobei das Ausstellerprofil (4) einen Ausstellercode (40) umfasst; und
- Verknüpfen des Ausstellerprofils (4) mit dem Tag (3), Verknüpfen des Ausstellercodes (40) mit dem Tag-Code (31);
- Zuweisen einer Verknüpfung (32), die dem Tag-Code (31) zugeordnet ist, der einen Zugriff auf das im Server gespeicherte Ausstellerprofil (4) gewährt, an das Tag (3); und wobei
- das Ausstellerprofil (4) mindestens ein Unterverzeichnis (41) umfasst und das Unterverzeichnis (41) für den Fernzugriff ausgewählt werden kann, wobei in einem Verbindungsstatus zwischen der tragbaren Kommunikationsvorrichtung (5) und dem Tag (3) die tragbare Kommunikationsvorrichtung (5) bereit ist, die Verknüpfung (31) des Tags zu interpretieren, die Verknüpfung (31) zu öffnen, um auf das im Server (2) gespeicherte Ausstellerprofil (4) und ferner auf das Unterverzeichnis (41) zuzugreifen;
das Verfahren ist dabei **gekennzeichnet durch**:
- Speichern einer Empfängerdatenbank (50) mit Empfängerprofilen (51, 5m, 51 ', 5m') auf dem Server (2), sodass im Verbindungsstatus zwischen der tragbaren Kommunikationsvorrichtung (5) und dem Tag (3) das Tag (3) das der tragbaren Kommunikationsvorrichtung (5) zugeordnete Empfängerprofil (51) an den Server (2) überträgt, dieses Empfängerprofil (51) mit den in der Empfängerdatenbank (50) gespeicherten Empfängerprofilen (51, 5m, 51 ', 5m') vergleicht und auf Grundlage des Vergleichs einen Zugriff auf das Ausstellerprofil (4) und/oder das Unterverzeichnis (41) bereitstellt;
- wobei das Ausstellerprofil (4) ferner mindestens ein vertrauliches Unterverzeichnis (41c) umfasst, so dass im Verbindungsstatus zwischen der tragbaren Kommunikationsvorrichtung (5) und dem Tag (3) das Tag das der tragbaren Kommunikationsvorrichtung (5) zugeordnete Empfängerprofil (51) an den Server überträgt, dieses Empfängerprofil (51) mit den Empfängerprofilen (51, 5m, 51', 5m'), die in der Empfängerdatenbank (50) gespeichert sind, vergleicht und aufgrund des Vergleichs den Zugriff auf das Ausstellerprofil (4) und/oder das Unterverzeichnis (41) und/oder das vertrauliche Unterverzeichnis (41c) ermöglicht.

2. Verfahren nach dem vorhergehenden Anspruch, wobei das Ausstellerprofil dem Empfängerprofil (51) zugeordnet ist, so dass Aktualisierungen in diesem Ausstellerprofil (4) für das zugeordnete Empfängerprofil (51) zugänglich sind.

3. Verfahren nach einem der vorhergehenden Ansprüche, wobei der Server (2) eine Tag-Datenbank (30) umfasst, in der der Tag-Code (31) jedes Tags (3) so angeordnet ist, dass in dem Schritt der Verknüpfung des Ausstellerprofils (4) mit dem Tag (3) das Ausstellerprofil (4) mit dem Tag verknüpft wird, wobei der Tag-Code (31) auf dem Server (2) mittels SMS-Nachrichten-, E-Mail- oder Sicherheitsnachrichten-Authentifizierung empfangen wird.

4. Verfahren nach einem der vorhergehenden Ansprüche, wobei die tragbare Kommunikationsvorrichtung (5) eine Vielzahl von Empfängerprofilen (51 bis 5m) umfasst, die der tragbaren Kommunikationsvorrichtung (5) zugeordnet sind und in der tragbaren Kommunikationsvorrichtung (5) ausgewählt werden können, so dass vor der Verbindung zwischen der tragbaren Kommunikationsvorrichtung (5) und dem Tag (3) ein Empfängerprofil (51) in der tragbaren Kommunikationsvorrichtung (5) ausgewählt wird.

5. Verfahren nach einem der vorhergehenden Ansprüche, wobei das Tag (3) ein konfiguriertes Speichergerät (33) umfasst, so dass in dem Schritt des Verbindens des Ausstellerprofils (4) mit dem Tag (3), das Ausstellerprofil (4) oder mindestens ein Unterverzeichnis (41) des Ausstellerprofils (4) in dem Speichergerät (33) des Tags (3) gespeichert ist, wobei in einem Verbindungsstatus zwischen der tragbaren Kommunikationsvorrichtung (5) und dem Tag (3) die tragbare Kommunikationsvorrichtung auf das Ausstellerprofil (4) oder das Unterverzeichnis (41), das in dem Speichergerät (33) des Tags (3) abgelegt ist, zugreift.

6. Verfahren nach einem der vorhergehenden Ansprüche, wobei das Ausstellerprofil (4) und/oder die Unterverzeichnisse (41 bis 4p) des Ausstellerprofils (41) mittels Blockchain authentifiziert werden, wobei das Ausstellerprofil (4) und/oder die Unterverzeichnisse (41 bis 4p) in einer Transaktion in einer Blockchain durch den Server (2) aufgezeichnet werden, und wobei die Empfängerdatenbank (50) mittels einer Blockchain authentifiziert wird, wobei jedes der Vielzahl von Empfängerprofilen (51, 5m, 51', 5m') in einer Transaktion in einer Blockchain durch den Server (2) aufgezeichnet wird.

7. Informationsverarbeitungssystem (1), das mindestens ein Tag (3) umfasst, das mit einer Verbindung (32) für den Zugriff auf einen Server (2) versehen ist, wobei diese Verbindung (32) durch eine tragbare Kommunikationsvorrichtung (5) interpretierbar ist, die zum Herstellen einer Datenverbindung mit dem Tag (3) bereitgestellt ist, und wobei das System Mittel zum Ausführen des Verfahrens nach den Ansprüchen 1 bis 6 umfasst.

8. System nach Anspruch 7, wobei das Tag (3) ein NFC-Tag ist und die tragbare Kommunikationsvorrichtung (5) so konfiguriert ist, dass sie eine NFC-Datenverbindung mit dem NFC-Tag herstellt.

9. System nach Anspruch 7 oder 8, wobei die dem Tag (3) zugeordnete Verknüpfung (32) einen verschlüsselten URL-Code umfasst, der von der tragbaren Kommunikationsvorrichtung (5) gelesen werden kann.

10. System nach Anspruch 8 oder 9, wobei das Tag (3) in eine tragbare Kommunikationsvorrichtung integriert ist.

11. System nach Anspruch 8, wobei das Tag (3) ein QR-Tag ist und die tragbare Kommunikationsvorrichtung (5) eine QR-Tag-Scanner-Anwendung umfasst, die konfiguriert ist, eine URL-GET-Anforderung für eine Webseite in einem Webbrowser der tragbaren Kommunikationsvorrichtung (5) zu erzeugen, in der die QR-Tag-Scanner-Anwendung so konfiguriert ist, dass sie die Webseite an den Webbrowser der tragbaren Kommunikationsvorrichtung (5) überträgt, um auf das im Server (2) gespeicherte Ausstellerprofil (4) zuzugreifen und ferner auf das Unterverzeichnis (41) und/oder das vertrauliche Unterverzeichnis (41p) zuzugreifen, wenn diese Unterverzeichnisse für den Fernzugriff ausgewählt wurden.

12. System nach einem der Ansprüche 7 bis 11, wobei eine Vielzahl von Tags (3, 3') in bestimmten Räumen einer Infrastruktur angeordnet ist, wobei jedes Ausstellerprofil (4, 4') und/oder jedes Unterverzeichnis (41, 41') jedes Ausstellerprofils (4, 4') mit der Anordnung jedes Tags (3, 3') in dem bestimmten Raum der Infrastruktur verbunden ist.

13. Computerprogramm, das Anweisungen umfasst, die, wenn das Programm von einem Computer ausgeführt wird, den Computer veranlassen, das Verfahren nach den Ansprüchen 1 bis 6 auszuführen.

## Revendications

1. Une procédé mis en oeuvre par ordinateur pour gérer et transmettre des informations dans un système de gestion de l'information (1) composé d'au moins un de serveurs (2) ont fourni des informations de stockage lointain, au moins une étiquette (3) dotée d'un code d'étiquette (31), un dispositif de communication portable (5) configuré pour établir une connexion avec ladite étiquette (3), ledit dispositif de communication portable (5) ayant un profil de récepteur (51) associé, la méthode comprenant les étapes consistant à :
- stocker sur le serveur (2) au moins un profil d'émetteur (4), dans lequel ledit profil d'émetteur (4) comprend un code d'émetteur (40) ; et
- relier le profil de l'émetteur (4) à l'étiquette (3), associer le code de l'émetteur (40) au code de l'étiquette (31) ;
- attribuer à l'étiquette (3) un lien (32) associé au code d'étiquette (31) qui donne accès au profil d'émetteur (4) stocké dans le serveur ; et
- le profil d'émetteur (4) comprend au moins un sous-répertoire (41), ledit sous-répertoire (41) pouvant être sélectionné en accès lointain, dans lequel, dans un état de connexion entre le dispositif de communication portable (5) et l'étiquette (3), ledit dispositif de communication portable (5) est prêt à interpréter la liaison (31) de l'étiquette, à ouvrir ladite liaison (31) pour accéder au profil d'émetteur (4) stocké dans le serveur (2), et accéder en outre au sous-répertoire (41) ;
la méthode étant **caractérisé par** :
- stocker sur le serveur (2) une base de données de récepteur (50) comprenant des profils de récepteur (51, 5m, 51', 5m'), de telle sorte que, dans l'état de connexion entre le dispositif de communication portable (5) et l'étiquette (3), ladite étiquette (3) transmet au serveur (2) le profil de récepteur (51) associé au dispositif de communication portable (5), compare ledit profil de récepteur (51) avec les profils de récepteur (51, 5m, 51', 5m') stockés dans la base de données de récepteur (50) et, sur la base de la comparaison, donne accès au profil d'émetteur (4) et/ou au sous-répertoire (41) ;
- dans lequel le profil d'émetteur (4) comprend en outre au moins un sous-répertoire confidentiel (41c), de sorte que dans l'état de connexion entre le dispositif de communication portable (5) et l'étiquette (3), ladite étiquette transmet au serveur le profil récepteur (51) associé au dispositif de communication portable (5), compare ledit profil récepteur (51) avec les profils de récepteur (51, 5m, 51', 5m') stockés dans le récepteur base de données (50) et, sur la base de la comparaison, donne accès au profil d'émetteur (4) et/ou au sous-répertoire (41) et/ou au sous-répertoire confidentiel (41c).

2. Méthode selon la revendication précédente, dans lequel le profil d'émetteur (3) est associé au profil de récepteur (51), de sorte que des mises à jour dans ledit profil d'émetteur (4) sont accessibles par le profil de récepteur associé (51).

3. Méthode selon l'une des revendications précédentes, dans lequel le serveur (2) comprend une base de données d'étiquettes (30) dans laquelle le code d'étiquette (31) de chaque étiquette (3) est agencé, de telle sorte que, dans l'étape de liaison du profil d'émetteur (4) avec ladite étiquette (3), le profil d'émetteur (4) est lié à l'étiquette, recevant le code d'étiquette (31) sur le serveur (2) au moyen d'une messagerie SMS, d'un courrier électronique ou d'une authentification de messagerie de sécurité.

4. Méthode selon l'une des revendications précédentes, dans lequel le dispositif de communication portable (5) comprend une pluralité de profils de récepteur (51 à 5m) associés au dispositif de communication portable (5) et pouvant être sélectionnés dans ledit dispositif de communication portable (5), de telle sorte que, avant le connexion entre le dispositif de communication portable (5) et l'étiquette (3), un profil de récepteur (51) est sélectionné dans le dispositif de communication portable (5).

5. Méthode selon l'une des revendications précédentes, dans lequel l'étiquette (3) comprend un moyen de stockage configuré (33), de telle sorte que dans l'étape de liaison le profil d'émetteur (4) avec ladite étiquette (3), le profil d'émetteur (4) ou au moins un sous-répertoire (41) dudit profil d'émetteur (4) sont stockés dans lesdits moyens de stockage (33) de l'étiquette (3), dans lequel, dans un état de connexion entre le dispositif de communication portable (5) et l'étiquette (3), ledit dispositif de communication portable accède au profil émetteur (4) ou au sous-répertoire (41) stocké dans le stockage moyens (33) de l'étiquette (3).

6. Méthode selon l'une des revendications précédentes, dans lequel le profil d'émetteur (4) et/ou les sous-répertoires (41 à 4p) dudit profil d'émetteur (41) sont authentifiés au moyen de la chaîne de blocs, du profil d'émetteur (4) et/ou du sous-répertoires (41 à 4p) étant enregistrés dans une transaction dans une chaîne de blocs par le serveur (2), et dans lequel la base de données de récepteur (50) est authentifiée au moyen d'une chaîne de blocs dans laquelle chacune de la pluralité de profils de récepteur (51, 5m, 51', 5m') est enregistrée dans une transaction dans une chaîne de blocs par le serveur (2).

7. Un système de gestion d'informations (1) comprenant au moins une étiquette (3) pourvue d'un lien (32) d'accès lointain à un serveur (2), ce lien (32) pouvant être interprété par un dispositif de communication portable (5) prévu pour établir une connexion de données avec ladite étiquette (3), et ledit système comprenant des moyens mettant en oeuvre la méthode des revendications 1 à 6.

8. Système selon la revendication 7, dans lequel l'étiquette (3) est une étiquette NFC et le dispositif de communication portable (5) est configuré pour établir une connexion de données NFC avec ladite étiquette NFC.

9. Système selon la revendication 7 ou 8, dans lequel le lien (32) attribué à l'étiquette (3) comprend un code URL crypté, lisible par le dispositif de communication portable (5).

10. Système selon la revendication 8 ou 9, dans lequel l'étiquette (3) est incorporé dans un dispositif de communication portable.

11. Système selon la revendication 8, dans lequel l'étiquette (3) est une étiquette QR, dans lequel le dispositif de communication portable (5) comprend une application de scanner d'étiquette QR configurée pour générer d'obtenir une requête URL à partir d'une page Web dans un site Web navigateurs du dispositif de communication portable (5) ; dans lequel l'application de balayage d'étiquette QR est configurée pour transmettre la page Web au navigateur Web du dispositif de communication portable (5), pour accéder au profil d'émetteur (4) stocké dans le serveur (2), et pour accéder en outre au sous-répertoire (41) et/ou au sous-répertoire confidentiel (41p), si lesdits sous-répertoires ont été sélectionnés à distance.

12. Le système selon l'une quelconque des revendications 7 à 11, dans lequel une pluralité d'étiquettes (3, 3') est disposée dans des espaces particuliers d'une infrastructure, chaque profil émetteur (4, 4') et/ou chaque sous-répertoire (41, 41') de chaque profil émetteur (4, 4') étant associé à la disposition de chaque étiquette (3, 3') dans ledit espace particulier de l'infrastructure.

13. Programme informatique comprenant des instructions qui, lorsque le programme est exécuté par un ordinateur, amène ledit ordinateur à mettre en oeuvre la méthode des revendications 1 à 6.
